# EUROPEAN PATENT APPLICATION

(11) **EP 4 432 022 A1**
(43) Date of publication of application: **18.09.2024**
(21) Application number: 23825362.9
(22) Date of filing: 16.06.2023
(51) Int. Cl.: G05B 15/02, G05B 19/418

(54) **OPERATING CONTROL METHOD, ELECTRIC APPLIANCE, AND CLEANING TREATMENT DEVICE**

(30) Priority: 30.01.2023 CN 202310071880
(71) Applicant: Wuxi Little Swan Electric Co., Ltd., Wuxi, Jiangsu 214028 (CN)
(72) Inventor: HOU, Qi, Wuxi, Jiangsu 214028 (CN); PENG, Weikang, Wuxi, Jiangsu 214028 (CN); MA, Xiaole, Wuxi, Jiangsu 214028 (CN); WU, Chengwen, Wuxi, Jiangsu 214028 (CN); OU, Jiao, Wuxi, Jiangsu 214028 (CN); SUN, Zheng, Wuxi, Jiangsu 214028 (CN); WANG, Weihua, Wuxi, Jiangsu 214028 (CN); ZHANG, Guangmeng, Wuxi, Jiangsu 214028 (CN); TANG, Qin, Wuxi, Jiangsu 214028 (CN); TANG, Jilin, Wuxi, Jiangsu 214028 (CN); XU, Guangrong, Wuxi, Jiangsu 214028 (CN); LI, Han, Wuxi, Jiangsu 214028 (CN); QIN, Yanjie, Wuxi, Jiangsu 214028 (CN); HOU, Sanqin, Wuxi, Jiangsu 214028 (CN); GU, Hao, Wuxi, Jiangsu 214028 (CN)
(74) Representative: RGTH
(86) International application number: PCT/CN2023/100788
(87) International publication number: WO 2024/159688

(57) **Abstract**

An operation control method, an electric appliance, and a cleaning and treatment apparatus are provided. The operation control method is performed by a first device. The method includes: acquiring a user instruction for a second device; generating an operation instruction for the second device based on the user instruction; and sending the operation instruction to the second device. The operation instruction is used for instructing the second device to perform a corresponding target operation. The first device is one of a clothes treatment device and a floor cleaning device, and the second device is another one of the clothes treatment device and the floor cleaning device. According to the technical solution of the present disclosure, the first device receives the user instruction for the second device, and sends the operation instruction generated on this basis to the second device, such that the second device performs the corresponding target operation, thereby increasing the control modes of the second device, improving the condition of a single control mode caused by achieving control only based on the floor cleaning device, and eliminating the need for a user to walk to the front of the clothes treatment device for operation, thereby improving the convenience of control.

## Description

The present application claims priority of Chinese Patent Application No. 202310071880.0, titled "OPERATION CONTROL METHOD, ELECTRIC APPLIANCE, AND CLEANING AND TREATMENT APPARATUS," and filed with China National Intellectual Property Administration on January 30, 2023, which is incorporated herein in its entirety by reference.

### FIELD

The present disclosure relates to the technical field of home appliances, and more particularly, to an operation control method, an electric appliance, and a cleaning and treatment apparatus.

### BACKGROUND

With the popularization of home appliances such as clothes treatment devices and floor cleaning devices, more people use the above-mentioned devices instead of manual handling of clothes or cleaning the floor, reducing manual labor, improving the intelligence degree of daily life, and improving the quality of life.

In the related art, during the use of a floor cleaning device, a user is usually required to interact with the floor cleaning device to achieve manipulation of the floor cleaning device, such that the floor cleaning device cleans the floor based on progress and relevant parameters set by the user, thereby resulting in a single mode of controlling the floor cleaning device and poor convenience.

Likewise, during the use of a clothes treatment device, a user is usually required to walk to the front of the washing machine before the clothes treatment device is operated to select a clothes treatment control parameter, and then the clothes are treated by the clothes treatment device based on the parameter, thereby resulting in that the user has poor convenience in handling the clothes treatment device.

### SUMMARY

### (I) Technical Problem to be Solved

The technical problem to be solved by the present disclosure is to solve the problem of the user's poor control convenience of the existing clothes treatment device.

### (II) Technical Solutions

In order to solve the above-mentioned technical problem, embodiments of the present disclosure provide an operation control method, an electric appliance, and a cleaning and treatment apparatus.

The present disclosure provides an operation control method performed by a first device. The operation control method includes: acquiring a user instruction for a second device; generating an operation instruction for the second device based on the user instruction; and sending the operation instruction to the second device, the operation instruction being used for instructing the second device to perform a corresponding target operation. The first device is one of a clothes treatment device and a floor cleaning device, and the second device is another one of the clothes treatment device and the floor cleaning device.

In an exemplary embodiment of the present disclosure, the operation control method further includes: acquiring current status data sent by the second device; generating information to be notified based on the current status data; and presenting the information to be notified. The information to be notified is used for notifying a user of a current status of the second device.

In an exemplary embodiment of the present disclosure, the second device is the floor cleaning device, and the current status data comprises at least one of an alarm status, a cleaning progress, a dust cup status, or a water volume status; or the second device is the clothes treatment device, and the current status data comprises at least one of a clothes treatment progress, remaining treatment time, or an alarm status.

In an exemplary embodiment of the present disclosure, the first device is the clothes treatment device and the second device is the floor cleaning device. The operation control method further includes: acquiring feedback information of the floor cleaning device after receiving the operation instruction; and presenting, based on the feedback information, a status that the floor cleaning device has received the operation instruction.

In an exemplary embodiment of the present disclosure, the operation control method further includes, prior to acquiring the current status data sent by the second device: acquiring, from the user, an inquiry instruction regarding the current status of the floor cleaning device; and sending a request to the floor cleaning device for feedback on the current status based on the inquiry instruction.

In an exemplary embodiment of the present disclosure, the first device is the floor cleaning device and the second device is the clothes treatment device, and the floor cleaning device moves within a predetermined spatial range. The operation control method further includes: acquiring a communication status between the floor cleaning device and the clothes treatment device; and when the floor cleaning device establishes a communication connection with the clothes treatment device, sending the operation instruction to the clothes treatment device and/or acquiring the current status data sent by the clothes treatment device.

In an exemplary embodiment of the present disclosure, the acquiring the communication status between the floor cleaning device and the clothes treatment device includes: acquiring a first distance between a current position of the floor cleaning device and the clothes treatment device. The floor cleaning device establishing the communication connection with the clothes treatment device includes: the first distance being shorter than or equal to a first predetermined distance threshold.

In an exemplary embodiment of the present disclosure, the operation control method further includes: acquiring a second distance between a current position of the floor cleaning device and the user; and presenting the information to be notified when the second distance is shorter than or equal to a second predetermined distance threshold.

In an exemplary embodiment of the present disclosure, the operation control method further includes: acquiring a third distance between a current position of the floor cleaning device and the user; and presenting prompt information when the third distance is shorter than or equal to a third predetermined distance threshold. The prompt information is used for prompting the user to issue the user instruction for the clothes treatment device.

The present disclosure provides an operation control method performed by a second device. The operation control method includes: acquiring an operation instruction sent by a first device, the operation instruction being generated by the first device based on an acquired user instruction for the second device; and performing a corresponding target operation based on the operation instruction. The first device is one of a clothes treatment device and a floor cleaning device, and the second device is another one of the clothes treatment device and the floor cleaning device.

In an exemplary embodiment of the present disclosure, the operation control method further includes sending current status data to the first device. The current status data is received by the first device, and the first device generates information to be notified for presenting to a user, and the information to be notified is used for notifying the user of a current status of the second device.

In an exemplary embodiment of the present disclosure, the second device is the floor cleaning device, and the current status data includes at least one of an alarm status, a cleaning progress, a dust cup status, or a water volume status; or the second device is the clothes treatment device, and the current status data includes at least one of a clothes treatment progress, remaining treatment time, or an alarm status.

In an exemplary embodiment of the present disclosure, the second device is the floor cleaning device, and the target operation includes at least one of sweeping, vacuuming, water spraying, brushing, blotting, or polishing; or the second device is the clothes treatment device, and the target operation includes at least one of washing, rinsing, spin-drying, drying, or self-cleaning.

In an exemplary embodiment of the present disclosure, the first device is the clothes treatment device and the second device is the floor cleaning device, and the operation control method further includes: sending feedback information to the clothes treatment device in response to acquiring the operation instruction. The feedback information is used for the clothes treatment device to present a status that the operation instruction has been received by the floor treatment device.

In an exemplary embodiment of the present disclosure, the operation control method further includes, prior to sending the current status data to the first device: receiving a request sent by the clothes treatment device for feedback on a current status; and generating the current status data in response to the request.

The present disclosure further provides an electric appliance including a processor and a memory. The processor is configured to invoke a program or an instruction stored in the memory to perform any one of the methods described above.

The present disclosure further provides a cleaning and treatment apparatus including a first device and a second device. The first device is communicatively connected to the second device, and the first device is configured to perform any one of the above methods executed by the first device. The second device is configured to perform any one of the above methods executed by the second device. The first device is one of a clothes treatment device and a floor cleaning device, and the second device is another one of the clothes treatment device and the floor cleaning device.

The present disclosure further provides a computer storage medium. The computer storage medium may store a program, which may carry out, when being executed, some or all of the steps of the operation control method in the embodiments of the first aspect of the present disclosure.

### (III) Advantageous Effects

The above technical solutions of the embodiments of the present disclosure have the following advantages as compared with the prior art.

The operation control method of the present disclosure is performed by the first device. The operation control method includes: acquiring a user instruction for a second device; generating an operation instruction for the second device based on the user instruction; and sending the operation instruction to the second device. The operation instruction is used for instructing the second device to perform a corresponding target operation. The first device is one of a clothes treatment device and a floor cleaning device, and the second device is another one of the clothes treatment device and the floor cleaning device. According to the technical solution of the present disclosure, the first device receives the user instruction for the second device, and sends the operation instruction generated on this basis to the second device, such that the second device performs a corresponding target operation, thereby increasing the control modes of the second device, improving the condition of a single control mode caused by achieving control only based on the floor cleaning device, and also eliminating the need for the user to walk to the front of the clothes treatment device for operation, thereby improving the convenience of control.

It is to be understood that the foregoing general description and the following detailed description are both exemplary and explanatory only and are not restrictive of the present disclosure.

### BRIEF DESCRIPTION OF THE DRAWINGS

FIG. 1 is a schematic flowchart of an operation control method according to an embodiment of the present disclosure.
FIG. 2 is a schematic flowchart of an operation control method according to another embodiment of the present disclosure.
FIG. 3 is a schematic flow diagram of an operation control method according to yet another embodiment of the present disclosure.
FIG. 4 is a schematic structural diagram of an operation control apparatus according to an embodiment of the present disclosure.
FIG. 5 is a schematic flowchart of an operation control method according to yet another embodiment of the present disclosure.
FIG. 6 is a schematic flowchart of an operation control method according to further another embodiment of the present disclosure.
FIG. 7 is a schematic flowchart of an operation control method according to still further another embodiment of the present disclosure.
FIG. 8 is a schematic structural diagram of an operation control apparatus according to another embodiment of the present disclosure.
FIG. 9 is a schematic structural diagram of an electric appliance according to an embodiment of the present disclosure.
FIG. 10 is a schematic structural diagram of a cleaning and treatment apparatus according to an embodiment of the present disclosure.

### DETAILED DESCRIPTION

To make the objects, technical solutions, and advantages of the embodiments of the present disclosure clearer, the technical solutions in the embodiments of the present disclosure will be clearly and completely described below. Obviously, the described embodiments are only some of the embodiments of the present disclosure, rather than all of the embodiments. Based on the embodiments of the present disclosure, all other embodiments obtained by those skilled in the art without involving any inventive efforts fall within the scope of the present disclosure.

Embodiments of the present disclosure provide an operation control method of integrating a clothes treatment device and a floor cleaning device. Operation control of one of the clothes treatment device and the floor cleaning device can be realized based on another one of the clothes treatment device and the floor cleaning device, and status feedback of the one device can be realized based on the other device. In this way, a user can conveniently control the clothes treatment device and the floor cleaning device based on an interaction between the two devices. The convenient control can be achieved specifically based on the control of the clothes treatment device on the floor cleaning device and status feedback of the floor cleaning device using the clothes treatment device. In another embodiment, control of the clothes treatment device is performed based on the floor cleaning device, and status feedback of the clothes treatment device is achieved through the floor cleaning device.

In some embodiments, the first device is a clothes treatment device, and the second device is a floor cleaning device. In the corresponding method, the clothes treatment device not only interacts with the user but also interacts with the floor cleaning device. Further, the method can receive and parse a user instruction for the floor cleaning device by the user, obtain a corresponding operation instruction, and send the corresponding operation instruction to the floor cleaning device. In this way, the clothes treatment device can be used to realize the control of the floor cleaning device, thereby increasing the control modes for the floor cleaning device, improving the problem of a single control mode caused by realizing the control only based on the floor cleaning device, and further improving the convenience of the control of the floor cleaning device.

In some embodiments, the user instruction may be a voice instruction. That is, when the user instruction is implemented as voice, and the clothes treatment device may have a built-in voice interaction module through which the user interacts with the clothes treatment device. In an exemplary embodiment of the present disclosure, when the user sends a voice instruction, the voice interaction module in the clothes treatment device receives and parses the voice instruction, generates the operation instruction for the floor cleaning device, and sends the operation instruction to the floor cleaning device. Accordingly, the floor cleaning device can receive the operation instruction and perform a corresponding target operation in a targeted manner, thereby achieving high convenience in voice control of the floor cleaning device based on the clothes treatment device. In an exemplary embodiment of the present disclosure, the floor cleaning device can feed back the status of receiving the operation instruction to the clothes treatment device. Accordingly, the clothes treatment device can be informed that the floor cleaning device has received the operation instruction, and may further present to inform the user.

In other embodiments, the user instruction may be at least one of a touch instruction or a key instruction, and is configured based on a specific form of an interaction structure integrated with the clothes treatment device without being limited thereto.

In some embodiments, the floor cleaning device may send current status data to the clothes treatment device for the clothes treatment device to display the current status of the floor treatment device. In an exemplary embodiment of the present disclosure, the current status data may be sent actively by the floor cleaning device or may be sent in response to a request from the clothes treatment device, which will be not limited thereto. In an exemplary embodiment of the present disclosure, the clothes treatment device may actively request current status data from the floor cleaning device, or request current status data from the floor cleaning device in response to a user inquiry, which will be not limited thereto.

In some embodiments, after the clothes treatment device acquires the current status data of the floor cleaning device, the user may be informed so as to prompt the user of the current status of the floor treatment device.

In some embodiments, when a dust full alarm of a dust cup and a low-water level signal alarm of a water tank raise in the floor cleaning device, the floor cleaning device can return to position to be charged or replenished with water, and corresponding current status data is sent to the clothes treatment device. Accordingly, the clothes treatment device receives and processes the current status data of the floor cleaning device, generates information to be notified, and illustratively reports in a voice present manner to notify the user. In other embodiments, the present of the information to be notified may be performed in other ways. For example, display of the information to be notified may be performed on a display screen, or the user may be informed with different types of alert, which is not limited herein.

In some embodiments, the first device is the floor cleaning device and the second device is the clothes treatment device. In the corresponding method, the floor cleaning device not only interacts with the user, but also interacts with the clothes treatment device, and can receive and parse a user instruction of the user for the clothes treatment device, to obtain a corresponding operation instruction and send the corresponding operation instruction to the clothes treatment device. In this way, the floor cleaning device can realize the control of the clothes treatment device, such that the user can realize the control of the clothes treatment device through the floor cleaning device without walking to the clothes treatment device, thus improving the convenience of the control of the clothes treatment device.

In some embodiments, the floor cleaning device moves within a predetermined spatial range. When the floor cleaning device moves into a certain distance range of the user, the user instruction can be received, or notification information related to the current status of the clothes treatment device can be conveyed to the user, to achieve interaction with the user within the certain distance range, and improve effectiveness of the interaction between the floor cleaning device and the user. This enables the floor cleaning device to be triggered to execute a program related to the control of the clothes treatment device based on a distance condition, which is beneficial to save energy consumption of the floor cleaning device and improve the endurance thereof.

It can be understood that the predetermined spatial range may be an operating range of the floor cleaning device. When the user is located within the range, or within a range formed by superimposing this range with a signal acquisition range of the floor cleaning device, the floor cleaning device can acquire the user instruction sent by the user, thereby avoiding limitation on the spatial position where the user operates the clothes treatment device, and improving the convenience of operation.

In some embodiments, the floor cleaning device can receive and recognize a voice instruction issued by the user, i.e., the user instruction is implemented in a form of voice at this moment. In other embodiments, the user instruction may also be at least one of a touch instruction or a key instruction, which may be configured based on a specific form of the interaction structure integrated in the floor cleaning device and is not limited herein. The floor cleaning device can then send an operation instruction related to the clothes treatment device in the voice instruction to the clothes treatment device by a voice parse module via a wired transmission mode or a wireless transmission mode, in which the operation instruction includes an instruction for performing a relevant operation of the clothes treatment device and corresponding display. Accordingly, after receiving the operation instruction, the clothes treatment device performs a corresponding target operation in a targeted manner, thereby realizing voice control of the clothes treatment device based on the floor cleaning device, which is highly convenient.

In some embodiments, when relevant processes, such as an alarm, washing progress, and washing completion, raise in the clothes treatment device, corresponding current status data can be sent to the floor cleaning device via wired transmission or wireless transmission. Accordingly, the floor cleaning device receives and processes the current status data of the clothes treatment device, generates the information to be notified, and illustratively presents in a voice presenting manner to notify the user. In other embodiments, the present of the information to be notified may be performed in other ways. For example, the display of the information to be notified may be performed on a display screen, or the user may be informed with different types of alert, which is not limited herein.

In some embodiments, the clothes treatment device may further transmit the remaining time of the clothes treatment progress, e.g., at least one of remaining time of the washing progress, remaining time of a rinsing progress, treating time of a drying progress, or the like, to the floor cleaning device via wired transmission or wireless transmission. Accordingly, the floor cleaning device receives the remaining time and informs the user, for example, by means of voice present, to inform the user in advance of remaining time for completion of the current progress.

In some embodiments, the floor cleaning device may include a washing machine, a dryer, a washing and drying machine, and the like for treating clothes, and the clothes treatment device may include a sweeper, a floor washer, and the like for cleaning floor, which is not limited herein.

In some embodiments, wired transmission may be used for communication between the floor cleaning device and the clothes treatment device. In an embodiment, the floor cleaning device and the clothes treatment device have pluggable interfaces through which a wired connection and communication are realized, to realize wired transmission of instructions and/or data. In another embodiment, the floor cleaning device and the clothes treatment device may communicate with each other via wireless transmission. In an exemplary embodiment, the wireless transmission may include local area network transmission (such as, WIFI and Bluetooth) or wide area network transmission (such as, 4G and 5G), which are not limited herein.

Hereinafter, an operation control method, an electric appliance, and a cleaning and treatment apparatus according to embodiments of the present disclosure will be described by way of examples with reference to the accompanying drawings.

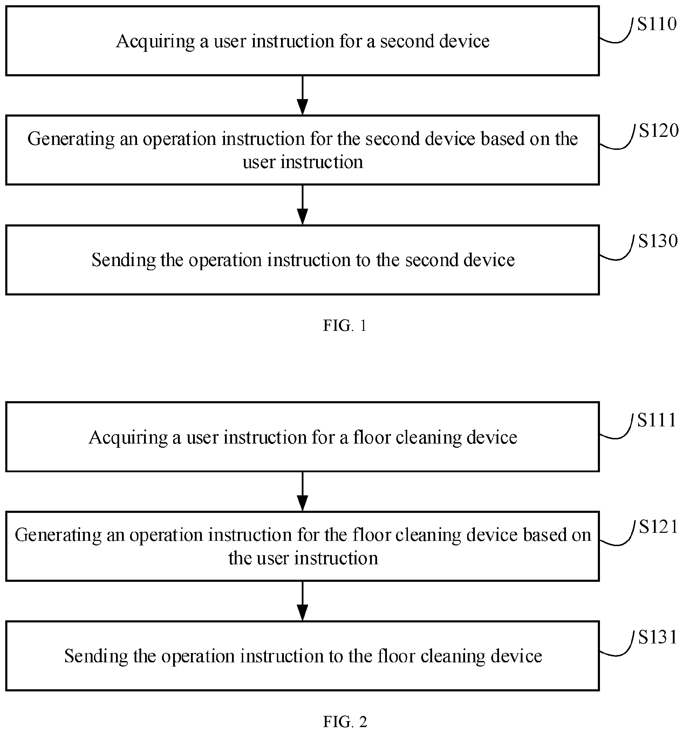

For example, FIG. 1 is a schematic flowchart of an operation control method according to an embodiment of the present disclosure. The method is applicable to an application scenario where a second device needs to be controlled based on a first device, in particular, an application scenario where a floor cleaning device is controlled based on a clothes treatment device or an application scenario where a clothes treatment device is controlled based on a floor cleaning device. The method may be performed by an operation control apparatus of the first device according to an embodiment of the present disclosure, for example, by a controller in the clothes treatment device or the floor cleaning device. The operation control apparatus may be implemented in software and/or hardware. As shown in FIG. 1, the operation control method includes operations at blocks S110 to S130.

At block S 110, a user instruction for the second device is acquired.

In the embodiment of the present disclosure, the user instruction for the second device is an instruction from a user to control the second device. The instruction can be acquired by the first device, and is used to realize control of the second device based on the first device through interaction between the first device and the second device, thereby improving the convenience of control, which is exemplified with reference to specific situations.

At block S 120, an operation instruction for the second device is generated based on the user instruction.

In the embodiment of the present disclosure, the operation instruction for the second device is an instruction for controlling the second device to perform a corresponding operation. The instruction is generated by parsing the user instruction by the first device.

In an embodiment, when the user instruction is a voice instruction, and a voice interaction module of the first device may parse the voice instruction and generate the operation instruction accordingly.

It should be noted that the specific structural form of the operation instruction may be any form known to those skilled in the art, which is not limited herein.

At block S 130, the operation instruction is sent to the second device.

In an embodiment of the present disclosure, the operation instruction is used for instructing the second device to perform a corresponding target operation. The operation instruction is sent by the first device to the second device, and the specific mode of sending the instruction may be a wired transmission mode or a wireless transmission mode, which is not limited herein.

In the operation control method of the embodiment of the present disclosure, the first device receives the user instruction issued by the user for the second device, and generates the operation instruction based on the user instruction and send the operation instruction to the second device, thereby realizing manipulation of the second device by the user based on the first device. This can increase the control modes of the second device, improve the problem of a single control mode caused by realizing control only based on the second device, and improve the diversity and convenience of control.

In some embodiments, the first device is the clothes treatment device, and the second device is the floor cleaning device. For example, FIG. 2 is a schematic flowchart of an operation control method according to another embodiment of the present disclosure. As shown in FIG. 2, the method includes operations at blocks S111 to S131.

At block S 111, the user instruction for the floor cleaning device is acquired.

In an embodiment of the present disclosure, the user instruction for the floor cleaning device is an instruction issued by the user for the floor cleaning device, in an exemplary embodiment, the instruction may include instructions for manipulating the operation progress, operation parameters, start-stop control, and the like of the floor cleaning device.

In an exemplary embodiment, the user instruction may be at least one of a voice instruction, a key instruction, or a touch instruction. In an exemplary embodiment of the present disclosure, the clothes treatment device may capture a voice from the user and correspondingly acquire a voice instruction. In another embodiment, the clothes treatment device may receive an operation of the user on a target key and correspondingly acquire a key instruction. In a further embodiment, the clothes treatment device may receive a touch operation of the user on a target region, and correspondingly acquire a touch instruction. In other embodiments, the user instruction may be implemented in other forms, and the clothes treatment device may acquire the user instruction correspondingly, which are not limited herein.

In some embodiments, when the user instruction is a voice instruction, the user may issue the voice instruction within a certain distance from the clothes treatment device without having to walk to the front of the clothes treatment device, further expanding a range in which the control may be implemented, and improving the convenience of controlling the floor cleaning device based on the clothes treatment device.

In some embodiments, the clothes treatment device may have a built-in voice interaction module to receive and parse the voice instruction issued by the user, to generate the operation instruction for the clothes treatment device, or to generate the operation instruction for the floor cleaning device. In an exemplary embodiment, the voice instruction may be "controlling the floor cleaning device to perform floor vacuuming," "controlling the floor cleaning device to perform floor cleaning and drying," or other instructions, which is not limited herein.

In some embodiments, an operation interface of the clothes treatment device may switch between operation of the clothes treatment device and operation of the floor cleaning device to correspondingly receive the user instruction for the clothes treatment device or receive the user instruction for the floor cleaning device.

In an embodiment of the present disclosure, the instruction for the floor cleaning device from the user is acquired by the clothes treatment device, such that the control of the floor cleaning device can be realized by the clothes treatment device, and the diversity and convenience of the user's manipulation of the floor cleaning device can be improved.

At block S121, an operation instruction for the floor cleaning device is generated based on the user instruction.

In an embodiment of the present disclosure, the operation instruction for the floor cleaning device is an instruction for controlling the floor cleaning device to perform a corresponding operation. The instruction is generated by the clothes treatment device based on parse of the user instruction.

In an exemplary embodiment, when the user instruction is a voice instruction, a voice interaction module of the clothes treatment device may parse the voice instruction and generate the operation instruction accordingly.

It should be noted that the specific structural form of the operation instruction can be any form known to those skilled in the art, which is not limited herein.

At block S 131, the operation instruction is sent to the floor cleaning device.

In an embodiment of the present disclosure, the operation instruction is used for instructing the floor cleaning device to perform a corresponding target operation. The operation instruction is sent by the clothes treatment device to the floor cleaning device, and the specific mode of sending the instruction may be a wired transmission mode or a wireless transmission mode, which is not limited herein.

In the operation control method of the embodiment of the present disclosure, the clothes treatment device receives the user instruction for the floor cleaning device that is issued by the user, and generates the operation instruction based on the user instruction and transmit the operation instruction to the floor cleaning device, thereby realizing the manipulation of the floor cleaning device by the user based on the clothes treatment device. Therefore, the control modes of the floor cleaning device are increased, the problem of a single control mode caused by realizing control only based on the floor cleaning device is improved, and the diversity and convenience of control are improved.

In some embodiments, the clothes treatment device may also receive feedback information sent by the floor cleaning device that the operation instruction has been received and be presented, such that the user is informed and confirms the status that the floor cleaning device has received the operation instruction. In an exemplary embodiment, the method may further include: acquiring feedback information of the floor cleaning device after receiving the operation instruction; and presenting, based on the feedback information, a status that the floor cleaning device has received the operation instruction.

In the embodiment of the present disclosure, after receiving the operation instruction, the floor cleaning device sends the feedback information of the received operation instruction to the clothes treatment device. The clothes treatment device correspondingly receives the feedback information, and thus presents the feedback information to notify the user. Meanwhile, a closed control loop is formed to facilitate troubleshooting when the control fails.

In an exemplary embodiment, the present mode may include at least one of voice present, display screen display, pre-set sound effect, or pre-set light effect, and the like, which is not limited herein.

In some embodiments, the current status data of the floor cleaning device may be received based on the clothes treatment device, and the user may be notified of a current status of the floor cleaning device. In an exemplary embodiment, the method may further include: acquiring current status data sent by the floor cleaning device; generating information to be notified based on the current status data; and presenting the information to be notified. The information to be notified is used for notifying the user of a current status of the floor cleaning device.

In the embodiment of the present disclosure, the current status data is data used for characterizing the current status of the floor cleaning device, and may be sent by the floor cleaning device to the clothes treatment device in real time or on a timed, active or on-demand basis. Accordingly, the clothes treatment device acquires the current status data.

In some embodiments, the current status data includes at least one of an alarm status, a cleaning progress, a dust cup status, or a water volume status.

In an exemplary embodiment, the alarm status may include a full alarm of a dust cup, a low-water level signal alarm of a water tank, a low battery alarm, or other parameter alarm, which is not limited herein. Furthermore, when the current status data includes an alarm status, the floor cleaning device may automatically perform a corresponding response operation for the alarm status, for example, returning to position for recharging when the low battery alarm raises, returning to position for replenishing water when the low-water level signal alarm raises, and automatically emptying the dust cup when the full alarm of the dust cup raises, which is not limited herein. Furthermore, the floor cleaning device may perform alarm status present by the clothes treatment device.

In an exemplary embodiment, the cleaning progresses may include progresses such as sweeping, dirt removal, floor washing, and drying, as well as progresses related to cleaning a floor in which sweeping one-half of an area has been finished, dirt removal one-quarter of the area has been finished, floor washing has been completed, drying is being performed, and the like, which is not limited herein.

In an exemplary embodiment, the dust cup status may include statuses in which the dust cup is empty, the dust cup is full, and the like, and the water volume status may include statuses in which the water volume is sufficient, the water volume is insufficient, and the like, which is not limited herein.

In other embodiments, the current status data may further include other data that may characterize the current status of the clothes treatment device, which is not limited herein.

In the embodiment of the present disclosure, the information to be notified is used to notify the user of the current status of the floor cleaning device, and is generated within the clothes treatment device based on the received current status data of the floor cleaning device. The information to be notified is presented by the clothes treatment device to notify the user of the current status of the floor cleaning device.

In an exemplary embodiment, the information to be notified may include "the floor cleaning device is currently in a floor washing progress," "the floor cleaning device is currently in a sweeping progress with remaining time of two minutes," "the floor cleaning device is currently in a drying progress with remaining time of one minute," and the like, which are associated with the current status of the floor cleaning device and not limited herein.

In an exemplary embodiment, the mode in which the clothes treatment device presents the information to be notified to the user may be voice, display, different types of rings, different types of light flashing, and the like, which is not limited herein.

In the embodiment of the present disclosure, the clothes treatment device can receive current status data sent by the floor cleaning device, generate information to be notified based on the current status data, and present the information to be notified, to notify the user of the current status of the floor cleaning device, thereby conveniently reminding the user of the current status of the floor cleaning device. Accordingly, the user is ready to perform subsequent actions. The subsequent actions may include, for example, issuing a next user instruction or the like, which is not limited herein.

In some embodiments, the current status data may be actively sent by the floor cleaning device to the clothes treatment device in real time or at a regular interval, or may be sent to the clothes treatment device in response to a data request from the clothes treatment device. In an exemplary embodiment, for the latter, the method may further include, prior to acquiring current status data sent by the floor cleaning device: acquiring, from the user, an inquiry instruction regarding the current status of the floor cleaning device; and sending a request to the floor cleaning device for feedback of the current status based on the inquiry instruction.

In an embodiment of the present disclosure, the clothes treatment device acquires an inquiry instruction sent by the user, and then sends a request for feeding back the current status to the floor cleaning device. Accordingly, the floor cleaning device sends the current status data to the clothes treatment device in response to the request, such that the clothes treatment device performs presenting to notify the user, thereby achieving a targeted status reminder meeting the requirements of the user.

In other embodiments, the clothes treatment device may also receive a user's inquiry instruction for the clothes treatment device and present its current status in response to the inquiry instruction, which is not limited herein.

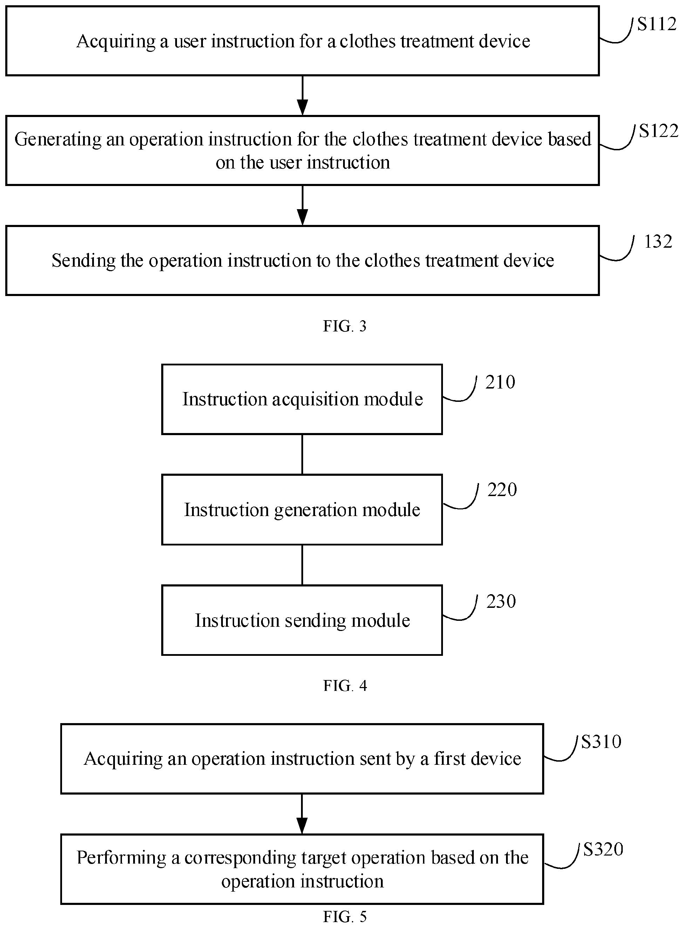

In some embodiments, the first device is the floor cleaning device, and the second device is the clothes treatment device. For example, FIG. 3 is a schematic flowchart of another operation control method according to an embodiment of the present disclosure. As shown in FIG. 3, the operation control method includes operations at blocks S112 to S132.

At block S112, a user instruction for the clothes treatment device is acquired.

In an embodiment of the present disclosure, the user instruction for the clothes treatment device is an instruction issued by the user for the clothes treatment device. In an exemplary embodiment, the instruction may include instructions for manipulating the operation progress, operation parameters, start-stop control, and the like of the clothes treatment device.

In an exemplary embodiment, the user instruction may be at least one of a voice instruction, a key instruction, or a touch instruction. In an exemplary embodiment of the present disclosure, the floor cleaning device may capture a voice from the user and correspondingly acquire a voice instruction. In another embodiment, the floor cleaning device may receive an operation of the user on a target key and correspondingly acquire a key instruction. In a further embodiment, the floor cleaning device may receive a touch operation of the user on a target region, and correspondingly acquire a touch instruction. In other embodiments, the user instruction may be implemented in other forms, and the floor cleaning device may acquire the user instruction correspondingly, which are not limited herein.

In some embodiments, the floor cleaning device may have a built-in voice recognition module to parse the voice instruction issued by the user, to generate the operation instruction for the floor cleaning device or generate the operation instruction for the clothes treatment device. In an exemplary embodiment, the voice instruction may be "controlling the clothes treatment device to wash, rinse, and dry common clothes" or other manipulation instructions for the clothes treatment device, which is not limited herein.

In some embodiments, an operation interface of the floor cleaning device may switch between operation of the floor cleaning device and operation of the clothes treatment device, to correspond to receiving the user instruction for the floor cleaning device or receiving the user instruction for the clothes treatment device.

In an embodiment of the present disclosure, the instruction for the clothes treatment device issued by the user is acquired by the floor cleaning device, such that the control of the clothes treatment device can be realized by the floor cleaning device and the convenience of the manipulation on the clothes treatment device by the user can be enhanced.

At block S120, an operation instruction for the clothes treatment device is generated based on the user instruction.

In an embodiment of the present disclosure, the operation instruction for the clothes treatment device is an instruction for controlling the clothes treatment device to perform a corresponding operation, and the instruction is generated by the floor cleaning device based on the parsing of the user instruction.

In an exemplary embodiment, when the user instruction is a voice instruction, a voice parsing module in the floor cleaning device may parse the voice instruction and generate the operation instruction accordingly.

It should be noted that the specific structural form of the operation instruction may be any form known to those skilled in the art, which is not limited herein.

At block S 132, the operation instruction is sent to the clothes treatment device.

In an embodiment of the present disclosure, the operation instruction is used for instructing the clothes treatment device to perform a corresponding target operation. The operation instruction is sent by the floor cleaning device to the clothes treatment device, and the specific mode of sending the instruction may be a wired transmission mode or a wireless transmission mode, which is not limited herein.

In the operation control method of an embodiment of the present disclosure, the floor cleaning device receives the user instruction issued by the user for the clothes treatment device, generates the operation instruction based on the user instruction, and transmits the operation instruction to the clothes treatment device. In this way, the user can manipulate the clothes treatment device based on the floor cleaning device, such that the user does not need to walk to the front of the clothes treatment device, but can manipulate the clothes treatment device within an operation range of the floor cleaning device and a signal acquisition range, thereby improving restriction on a manipulation position and improving manipulation convenience of the clothes treatment device.

In some embodiments, the current status data of the clothes treatment device may be received based on the floor cleaning device, and the user may be notified of the current status of the clothes treatment device. In an exemplary embodiment, the operation control method may further include: acquiring current status data sent by the clothes treatment device; generating information to be notified based on the current status data; and presenting the information to be notified.

In an embodiment of the present disclosure, the current status data is data for characterizing the current status of the clothes treatment device, and may be sent to the floor cleaning device by the clothes treatment device in real time or periodically. Accordingly, the floor cleaning device acquires the current status data.

In some embodiments, the current status data includes at least one of a clothes treatment progress, remaining treatment time, or an alarm status.

In an exemplary embodiment, clothes treatment processes may include washing, rinsing, spinning, drying, self-cleaning, screen cleaning, and the like processes, which is not limited herein.

In an exemplary embodiment, the remaining treatment time may be time required for the clothes treatment process to be completed, and may be in the unit of minutes or in the unit of seconds, which is not limited herein.

In an exemplary embodiment, the alarm status may include an excessive water volume alarm, an insufficient water volume alarm, a drainage abnormality alarm, a clothes overload alarm, an excessive drying temperature alarm, and the like, which is not limited herein.

In other embodiments, the current status data may further include other data that may characterize the current status of the clothes treatment device, which is not limited herein.

In an embodiment of the present disclosure, the information to be notified is used to notify the user of the current status of the clothes treatment device. The information to be notified is generated within the floor cleaning device based on the received current status data of the clothes treatment device and presented by the floor cleaning device, to notify the user of the current status of the clothes treatment device.

In an exemplary embodiment, the information to be notified may include information associated with a current status of the clothes treatment device, such as "the clothes treatment device is currently in a washing progress," "the clothes treatment device is currently in a self-cleaning progress, and the remaining time is two minutes," and "the clothes treatment device is currently in a drying progress, and the remaining time is one minute," which is not limited herein.

In an exemplary embodiment, the mode in which the floor cleaning device presents the information to be notified to the user may be voice, display, different types of rings, different types of light flashing, and the like, which is not limited herein.

In the embodiment of the present disclosure, the floor cleaning device can receive current status data sent by the clothes treatment device, generate information to be notified based on the current status data, and present the information to be notified, to notify the user of the current status of the clothes treatment device, thereby conveniently reminding the user of the current status of the clothes treatment device. Accordingly, the user is ready to perform subsequent actions. The subsequent actions may include, for example, issuing a next user instruction, or taking out clothes that have been treated, or the like, which is not limited herein.

In some embodiments, the clothes treatment device and the floor cleaning device may employ wireless communication over a wide area network or wireless communication over a local area network. When wireless communication is employed between the clothes treatment device and the floor cleaning device through the local area network, the communication may be achieved throughout the operation region of the floor cleaning device or within a predetermined distance (e.g. a first predetermined distance threshold hereinafter) in the vicinity of the clothes treatment device to ensure communication accuracy. In an exemplary embodiment, the operation control method may further include: acquiring a communication status between the floor cleaning device and the clothes treatment device; and when the floor cleaning device establishes a communication connection with the clothes treatment device, sending the operation instruction to the clothes treatment device and/or acquiring the current status data sent by the clothes treatment device.

In some embodiments, distance limit may be used for communicate between the floor cleaning device and the clothes treatment device. As such, the acquiring the communication status between the floor cleaning device and the clothes treatment device includes: acquiring a first distance between a current position of the floor cleaning device and the clothes treatment device. In this case, the conditions for establishing a communication connection between the floor cleaning device and the clothes treatment device may correspondingly include the first distance being equal to or shorter than the first predetermined distance threshold. That is, when the first distance is shorter than or equal to the first predetermined distance threshold, an operation instruction is sent to the clothes treatment device, and/or current status data sent by the clothes treatment device is acquired.

The first predetermined distance threshold is a threshold used for determining whether communication is established between the floor cleaning device and the clothes treatment device. When the distance between the floor cleaning device and the clothes treatment device is equal to or shorter than the first predetermined distance threshold, a communication connection is established between the floor cleaning device and the clothes treatment device, and the floor cleaning device and the clothes treatment device communicate with each other. For example, the operation instruction can be sent to the clothes treatment device, and current status data sent by the clothes treatment device can be received. When the distance between the floor cleaning device and the clothes treatment device is greater than the first predetermined distance threshold, transmission of the operation instruction and the current status data is not performed. Thus, when performing communication based on the local area network, when the floor cleaning device moves into a range of the first predetermined distance threshold in the vicinity of the clothes treatment device, transmission of the operation instruction and/or the current status data is performed therebetween to ensure communication accuracy. Therefore, accurate control of the clothes treatment device can be achieved based on the floor cleaning device, and accurate acquisition of the current status of the clothes treatment device can be achieved based on the floor cleaning device, thereby facilitating accurate notifying the user of the current status of the clothes treatment device.

In an exemplary embodiment, a distance sensor may be provided in the floor cleaning device to obtain the first distance. The distance sensor may include, for example, a laser radar or other types of sensors, and the acquisition of the first distance may also be accomplished by a distance sensor provided in the floor cleaning device, which are not limited herein.

It can be appreciated that the specific value of the first predetermined distance threshold may be set based on communication environment and communication requirements, which is not limited herein.

In the operation control method of an embodiment of the present disclosure, the floor cleaning device acquires the first distance, and makes determination in combination with a corresponding first predetermined distance threshold. In an exemplary embodiment of the present disclosure, the floor cleaning device communicates with the clothes treatment device when the first distance is shorter than or equal to the first predetermined distance threshold. When the first distance is greater than the first predetermined distance threshold, the floor cleaning device does not communicate with the clothes treatment device. Therefore, the effectiveness and accuracy of the communication between the floor cleaning device and the clothes treatment device can be ensured, thereby facilitating to enable accurate control of the clothes treatment device based on the floor cleaning device and accurate notification of the current status of the clothes treatment device.

In some embodiments, the interaction between the floor cleaning device and the user may include a contact interaction manner (such as, touch or a button) and a non-contact interaction manner (such as, voice). When the floor cleaning device interacts with the user based on voice, the floor cleaning device may interact throughout the operation region of the floor cleaning device or within a range of a predetermined distance (e.g., a second predetermined distance threshold hereinafter) from where the floor cleaning device moves to the vicinity of the user, to ensure that the information to be notified can be accurately and efficiently presented to the user, facilitating the user to achieve the current status of the clothes treatment device. In an exemplary embodiment, the operation control method further includes: acquiring a second distance between a current position of the floor cleaning device and the user; and presenting the information to be notified when the second distance is shorter than or equal to a second predetermined distance threshold.

The second predetermined distance threshold is a threshold used for determining whether the floor cleaning device presents the information to be notified to the user. When the distance between the floor cleaning device and the user is shorter than or equal to the second predetermined distance threshold, the floor cleaning device interacts with the user, for example, presents the information to be notified to the user. When the distance between the floor cleaning device and the user is greater than the second predetermined distance threshold, presentation of the information to be notified is not performed. Thus, when presenting the information to be notified based on the voice, the floor cleaning device presents the information to be notified to the user when the floor cleaning device moves into a second predetermined distance range near the user, to ensure that the user can accurately know the current status of the clothes treatment device.

In an exemplary embodiment, a distance sensor may be provided in the floor cleaning device to obtain the second distance. The distance sensor may include, for example, a laser radar or other types of sensors, and the acquisition of the distance may also be accomplished by a distance sensor provided in the floor cleaning device, which are not limited herein.

It can be appreciated that a specific value of the second predetermined distance threshold may be set based on interaction environment and information notification requirements, which is not limited herein.

In the operation control method of an embodiment of the present disclosure, the floor cleaning device acquires the second distance, and performs determination in combination with a corresponding second predetermined distance threshold. In an exemplary embodiment of the present disclosure, when the second distance is equal to or shorter than the second predetermined distance threshold, the floor cleaning device presents the information to be notified to the user. When the second distance is greater than the second predetermined distance threshold, the floor cleaning device does not perform information presentation. Therefore, the accuracy and effectiveness of the interaction between the floor cleaning device and the user can be ensured, and the user can be accurately notified of the current status of the clothes treatment device based on the floor cleaning device.

In some embodiments, during operation of the floor cleaning device and when parallel control of the clothes treatment device is not performed, the user can be reminded that control of the clothes treatment device may be performed and the clothes may be treated in time, when the floor cleaning device moves to a predetermined distance (e.g. a third predetermined distance threshold hereinafter) from the user. In an exemplary embodiment, the operation control method may further include: acquiring a third distance between a current position of the floor cleaning device and the user; and presenting prompt information when the third distance is shorter than or equal to a third predetermined distance threshold.

The prompt information is used for prompting the user to issue the user instruction for the clothes treatment device. In an exemplary embodiment, the prompt information may be prompt information such as "please confirming whether to control the clothes treatment device to operate" and "please issuing an instruction to control the clothes treatment device to operate." Specific presentation modes may include voice, display, effect, light flashing, and the like, which is not limited herein.

The third predetermined distance threshold is a threshold used for determining whether the floor cleaning device sends prompt information. When the distance between the floor cleaning device and the user is equal to or shorter than the third predetermined distance threshold, the floor cleaning device issues prompt information. When the distance between the floor cleaning device and the user is greater than the third predetermined distance threshold, the floor cleaning device does not issue prompt information. Thus, it is convenient for the user to accurately know the prompt information, and to ensure the effectiveness of the interaction between the floor cleaning device and the user.

In an exemplary embodiment, a distance sensor may be provided in the floor cleaning device to obtain the third distance. The distance sensor may include, for example, a laser radar or other types of sensors, and the acquisition of the distance may also be accomplished by a distance sensor provided in the floor cleaning device, which are not limited herein.

It can be appreciated that a specific value of the third predetermined distance threshold may be set based on interaction environment and prompt information issuance requirements, which is not limited herein.

In the operation control method of an embodiment of the present disclosure, the floor cleaning device acquires the third distance, and performs determination in combination with a corresponding third predetermined distance threshold. In an exemplary embodiment of the present disclosure, the floor cleaning device presents prompt information to the user when the third distance is equal to or shorter than the third predetermined distance threshold. When the third distance is greater than the third predetermined distance threshold, the floor cleaning device does not present prompt information. Thus, the accuracy and effectiveness of the interaction between the floor cleaning device and the user can be ensured, and information prompting can be performed based on whether the floor cleaning device accurately controls the clothes treatment device.

In the above embodiments, value relationships among the first predetermined distance threshold, the second predetermined distance threshold, and the third predetermined distance is not limited, and may be the same or different, and may be set based on requirements of the operation control method.

In other embodiments, the communication with the clothes treatment device and the interaction with the user may take place throughout the operation region of the floor cleaning device, which is not limited herein.

Based on the same inventive concept, embodiments of the present disclosure further provide an operation control apparatus of the first device. FIG. 4 is a schematic structural diagram of an operation control apparatus according to an embodiment of the present disclosure. As shown in FIG. 4, the operation control apparatus includes an instruction acquisition module 210 for acquiring a user instruction for the second device, an instruction generation module 220 for generating an operation instruction for the second device based on the user instruction, and an instruction sending module 230 for sending the operation instruction to the second device. The operation instruction is configured to instruct the second device to perform a corresponding target operation.

It can be understood that the operation control apparatus of the embodiments of the present disclosure can implement any one of the operation control methods according to the above embodiments, and thus have corresponding advantageous effects, which are not limited herein.

Embodiments of the present disclosure further provides a storage medium, such as a computer-readable storage medium. The storage medium has programs or instructions thereon to enable a computer to perform, when being executed, any one of the operation control methods of the embodiments as described above to achieve corresponding advantageous effects, which are not limited herein.

In some embodiments, the computer-executable instructions are used to implement, when being executed by a computer processor, the technical solutions of the operational control method according to any one of the embodiments of the present disclosure.

Embodiments of the present disclosure also provide an operation control method implemented based on the second device. FIG. 5 is a schematic flowchart of an operation control method according to yet another embodiment of the present disclosure. The operation control method is applicable to an application scenario where the second device needs to be controlled based on the first device, such as an application scenario where a floor cleaning device is controlled based on a clothes treatment device or an application scenario where a clothes treatment device is controlled based on a floor cleaning device. The operation control method may be performed by the operation control apparatus of the second device according to an embodiment of the present disclosure, for example, by a processor in the floor cleaning device or the clothes treatment device. The operation control apparatus may be implemented in software and/or hardware. As shown in FIG. 5, the operation control method includes operations at blocks S310 and S320.

At block S310, the operation instruction sent by the first device is acquired.

In an embodiment of the present disclosure, the operation instruction is generated by the first device based on an acquired user instruction for the second device. It can be understood in combination with the foregoing description.

The first device sends the operation instruction generated based on the user instruction to the second device. Accordingly, the second device acquires the operation instruction in order to perform a corresponding target operation, and reference may be made to an operation at block S320.

At block S320, the corresponding target operation is performed based on the operation instruction.

In an embodiment of the present disclosure, the target operation is an operation correspondingly indicated by the operation instruction.

In some embodiments, the second device is a floor cleaning device, and the target operation includes at least one of sweeping, vacuuming, water spraying, brushing, blotting, or polishing.

In some embodiments, the second device is a clothes treatment device, and the target operation includes at least one of washing, rinsing, spin-drying, drying, or self-cleaning.

In the operation control method of the embodiment of the present disclosure, the second device acquires the operation instruction sent by the first device and executes the corresponding target operation, to realize the control of the second device based on the first device, thereby increasing the control modes of the second device, improving the problem of a single control mode caused by realizing the control only based on the second device, and improving the diversity and convenience of control.

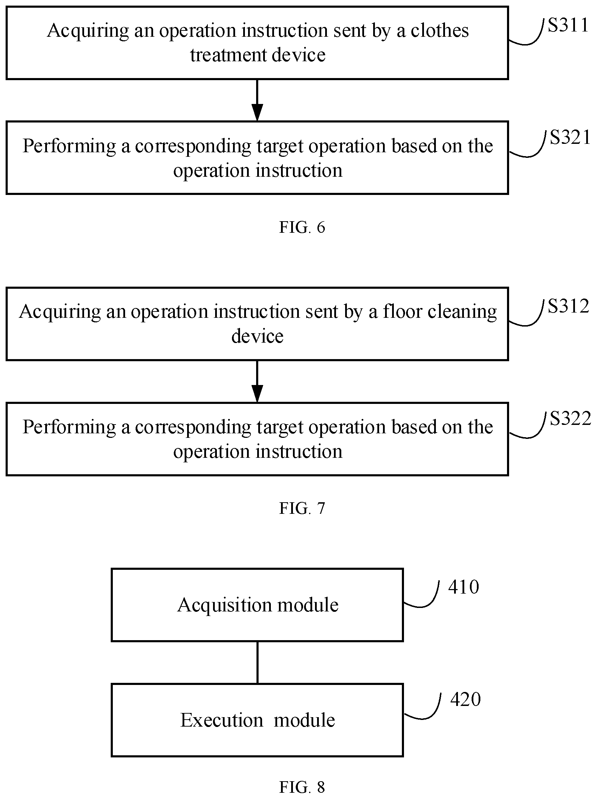

In some embodiments, the second device is a floor cleaning device, and the first device is a clothes treatment device. For example, FIG. 6 is a schematic flowchart of an operation control method according to another embodiment of the present disclosure. As shown in FIG. 6, the operation control method includes operations at blocks S311 and S321.

At block S311, an operation instruction sent by the clothes treatment device is acquired.

In an embodiment of the present disclosure, the operation instruction is generated by the clothes treatment device based on an acquired user instruction for the floor cleaning device.

In an embodiment of the present disclosure, the operation instruction is generated by the clothes treatment device based on the acquired user instruction for the floor cleaning device, which may be appreciated specifically in conjunction with the foregoing description.

The clothes treatment device sends the operation instruction generated based on the user instruction to the floor cleaning device. Accordingly, the floor cleaning device acquires the operation instruction in order to perform a corresponding target operation, and reference may be made to an operation at block S321.

At block S321, the corresponding target operation is performed based on the operation instruction.

In an embodiment of the present disclosure, the target operation is an operation correspondingly indicated by the operation instruction.

In an exemplary embodiment, when the operation instruction is "vacuuming floor with a conventional procedure," the corresponding target operation is to select routine procedures for dust removal from the floor. In other embodiments, the operation instruction may also be other instruction, and the target operation correspond to other operation indicated by the operation instruction, which are not described repeatedly or limited herein.

In the operation control method of the embodiment of the present disclosure, the floor cleaning device acquires the operation instruction sent by the clothes treatment device and executes the corresponding target operation, to realize the control of the floor cleaning device based on the clothes treatment device, thereby increasing the control modes of the floor cleaning device, improving the problem of a single control mode caused by realizing the control only based on the floor cleaning device, and improving the diversity and convenience of control.

In some embodiments, the floor cleaning device may also feed back the clothes treatment device with a status of receiving the operation instruction and perform presentation based on the clothes treatment device to notify the user. In an exemplary embodiment, the operation control method may further include: after acquiring the operation instruction, sending feedback information to the clothes treatment device. The feedback information is used for the clothes treatment device to present a status that the operation instruction has been received by the floor treatment device.

In an embodiment of the present disclosure, the floor cleaning device generates and sends feedback information to the clothes treatment device after receiving the operation instruction sent by the clothes treatment device. Accordingly, the clothes treatment device may receive the feedback information and perform presentation, such as voice presentation, to notify the user that the floor treatment device has received the operation instruction while forming a closed control loop, to facilitate troubleshooting when the control fails.

In some embodiments, the current status data of the floor cleaning device may be received based on the clothes treatment device, and the user may be notified of a current status of the floor cleaning device. In an exemplary embodiment, the operation control method may further include sending the current status data to the clothes treatment device. The current status data is received by the clothes treatment device for generating information to be notified for presenting to a user, and the information to be notified is used for notifying the user of a current status of the floor cleaning device.

In some embodiments, the current status data includes at least one of an alarm status, a cleaning progress, a dust cup status, or a water volume status, to flexibly enable targeted or multi-directional reminders of the current status of the clothes treatment device.

In an embodiment of the present disclosure, the floor cleaning device sends current status data to the clothes treatment device, and the clothes treatment device is capable of generating the information to be notified based on the received current status data and presenting the information to the user, to notify the user of the current status of the floor cleaning device, thereby conveniently reminding the user of the current status of the floor cleaning device such that the user is ready for subsequent actions.

In some embodiments, the current status data may be actively sent by the floor cleaning device to the clothes treatment device in real time or periodically, or may be sent to the clothes treatment device in response to a data request from the clothes treatment device. In an exemplary embodiment, for the latter, the operation control method may further include, prior to sending the current status data to the clothes treatment device: receiving a request for feeding back a current status sent by the clothes treatment device; and generating the current status data in response to the request.

The request sent by the clothes treatment device is used for instructing the floor cleaning device to feed back the current status to the clothes treatment device, e.g., sending the current status data. In an exemplary embodiment, the request may be generated based on an inquiry from the user, or may be automatically generated periodically or in real time, which is not limited herein.

In an embodiment of the present disclosure, the floor cleaning device receives the above request sent from the clothes treatment device, and generates current status data in response to the request. The generated current status data is then sent to the clothes treatment device to feed back the current status. Further, the clothes treatment device presents the current status of the floor cleaning device to notify the user, such that the user can know the current status of the floor cleaning device.

In some embodiments, the second device is a clothes treatment device, and the first device is a floor cleaning device. For example, FIG. 7 is a schematic flowchart of an operation control method according to another embodiment of the present disclosure. As shown in FIG. 7, the operation control method includes operations at blocks S312 and S322.

At block S312, an operation instruction sent by the floor cleaning device is acquired.

In an embodiment of the present disclosure, the operation instruction is generated by the floor cleaning device based on the acquired user instruction for the clothes treatment device, as may be appreciated specifically in conjunction with the foregoing description.

The floor cleaning device sends the operation instruction generated based on the user instruction to the clothes treatment device. Accordingly, the clothes treatment device acquires the operation instruction to perform a corresponding target operation, and reference may be made to an operation at block S322.

At block S322, the corresponding target operation is performed based on the operation instruction.

In an embodiment of the present disclosure, the target operation is an operation correspondingly indicated by the operation instruction.

In an exemplary embodiment, when the operation instruction is "washing and drying clothes with a quick-washing procedure," the corresponding target operation is to select the quick-washing procedure to wash and dry the clothes. In other embodiments, the operation instruction may also be other instruction, and the target operation corresponds to other operation indicated by the operation instruction, which are not described repeatedly or limited herein.

Embodiments of the present disclosure provide an operation control method, in which the clothes treatment device acquires the operation instruction sent by the floor cleaning device and performs a corresponding target operation, such that control of the clothes treatment device based on the floor cleaning device is achieved. In this way, the user does not need to walk to the front of the clothes treatment device, but can perform manipulation of the clothes treatment device within an operation range of the floor cleaning device and a signal acquisition range, such that limitation on a manipulation position is improved and the convenience of manipulation of the clothes treatment device is enhanced.

In some embodiments, the user may be notified of the current status of the clothes treatment device based on the floor cleaning device. In an exemplary embodiment, the operation control method may further include sending the current status data to the floor cleaning device. The current status data is received by the floor cleaning device, and information to be notified for presenting to the user is generated. The information to be notified is used for notifying the user of the current status of the clothes treatment device.

In some embodiments, the current status data includes at least one of a clothes treatment progress, remaining treatment time, or an alarm status, to flexibly enable targeted or multi-directional reminding of the current status of the clothes treatment device.

In an embodiment of the present disclosure, the clothes treatment device sends current status data to the floor cleaning device, and the floor cleaning device is capable of generating the information to be notified based on the received current status data and presenting the information to the user, to notify the user of the current status of the clothes treatment device, thereby conveniently reminding the user of the current status of the clothes treatment device such that the user is ready for subsequent actions.

Based on the same inventive concept, embodiments of the present disclosure further provide an operation control apparatus of the second device. FIG. 8 is a schematic structural diagram of an operation control apparatus according to another embodiment of the present disclosure. As shown in FIG. 8, the operation control apparatus includes an acquisition module 410 configured to acquire an operation instruction sent by the first device, and an execution module 420 configured to perform a corresponding target operation based on the operation instruction.

It can be understood that the operation control apparatus of the embodiments of the present disclosure can implement any one of the operation control methods according to the above embodiments, and has corresponding advantageous effects, which will not be repeatedly described herein.

Embodiments of the present disclosure also provide a storage medium, such as a computer-readable storage medium. The storage medium has programs or instructions thereon to enable a computer to perform, when being executed, any one of the operation control methods according to the embodiments as described above to achieve corresponding advantageous effects, which will not be repeatedly described herein.

In some embodiments, the computer-executable instructions are used to implement, when being executed by a computer processor, the technical solution of the operational control method according to any one of the embodiments of the present disclosure.

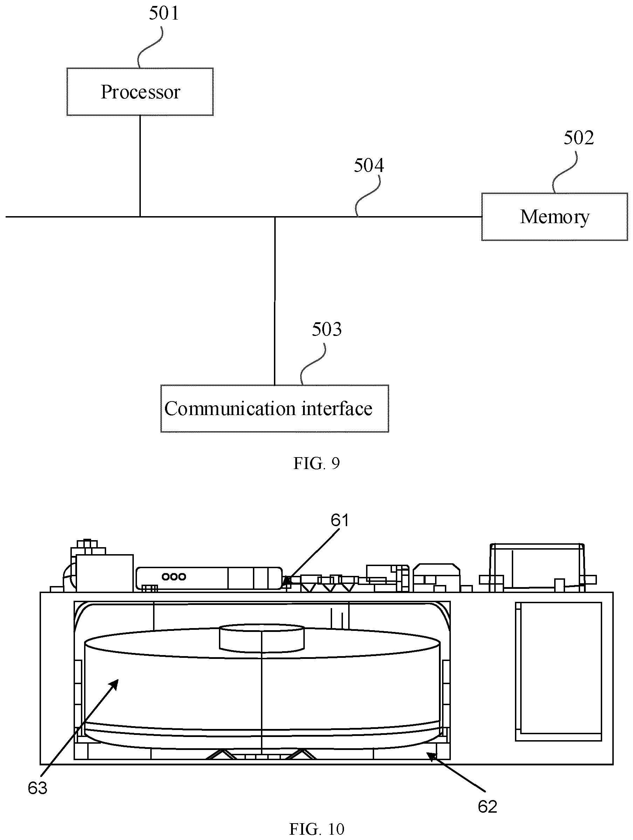

Concerning the foregoing embodiments, an embodiment of the present disclosure further provides an electric appliance. FIG. 9 is a schematic structural diagram of an electric appliance according to an embodiment of the present disclosure. As shown in FIG. 9, the electric appliance includes a processor 501 and a memory 502. The processor 501 performs any one of the methods of the above embodiments by invoking programs or instructions stored in the memory, in which the electric appliance may be, for example, a clothes treatment device or a floor cleaning device. Thus, the electric appliance has the advantages described in the above embodiments, which will not be described in detail herein.

As shown in FIG. 9, the electric appliance may include at least one processor 501, at least one memory 502, and at least one communication interface 503. The various assemblies of the electric appliance are coupled together through a bus system 504. The communication interface 503 is configured to transmit information with an external device. As can be appreciated, the bus system 504 is configured to enable connection communication between these assemblies. The bus system 504 includes a power bus, a control bus, and a status signal bus except for a data bus. For the clarity of illustration, however, the various buses are labeled as the bus system 504 in FIG. 9.

It could be understood that the memory 502 in this embodiment may be either volatile memory or nonvolatile memory, or may include both volatile and nonvolatile memory. In some embodiments, the memory 502 stores the following elements: executable units or data structures, or subsets thereof, or extended sets of operating systems and applications thereof. In an embodiment of the present disclosure, the processor 501 is configured to perform, when invoking programs or instructions stored in the memory 502, the method according to the embodiments of the present disclosure.

The method of the embodiments of the present disclosure may be applied to or implemented by the processor 5601. The processor 501 may be an integrated circuit chip with a signal processing capability. In an implementation process, the operations at blocks of the method as described above may be completed by an integrated logic circuit in hardware or instructions in software in the processor 501. The processor 501 mentioned above may be a general-purpose processor, a Digital Signal Processor (DSP), an Application Specific Integrated Circuit (ASIC), a Field Programmable Gate Array (FPGA), or other programmable logic devices, discrete gate, or transistor logic devices, or discrete hardware assemblies. A general-purpose processor may be a microprocessor, or the processor may be any common processor.

The steps of the method in the embodiments of the present disclosure may be performed directly by a hardware decoding processor, or by a combination of hardware and software units in the decoding processor. A software unit may be located in a random access memory, a flash memory, a read-only memory, a programmable read-only memory, an electrically erasable programmable memory, a register, or other storage media well known in the art. The storage medium is located in the memory 502. The processor 501 reads the information in the memory 302, and is in combination with the hardware thereof to complete the steps of the above method.

The electric appliance may include one physical component or a plurality of physical components in accordance with instructions generated by the processor 501 in performing the method of the embodiments of the present disclosure. Different physical components may be provided inside the electric appliance or outside the electric appliance, and may be a cloud server or the like. Various physical components cooperate with the processor 501 and memory 502 to implement the operations of the electric appliance in this embodiment.

From the above description of embodiments, it will be clear to those skilled in the art that the present disclosure may be implemented by means of software and necessary general-purpose hardware, but also may be implemented by means of hardware. The former is a better implementation mode in many cases. Based on such understanding, essential parts of the technical solutions of the present disclosure or a part of the technical solutions that contributes to the related art can be embodied in a form of a software product, which can be stored on a computer-readable storage medium, such as a floppy disk, a Read-Only Memory (ROM), a Random Access Memory (RAM), a flash, a hard disk, or an optical disk of a computer. The computer-readable storage medium includes instructions to cause a computer device (which may be a personal computer, a server, a network device, or the like) to perform the method of various embodiments of the present disclosure.

Embodiments of the present disclosure further provide a cleaning and treatment apparatus, and FIG. 10 is a schematic structural diagram of a cleaning and treatment apparatus according to an embodiment of the present disclosure. As shown in FIG. 10, the cleaning and treatment apparatus includes a clothes treatment device 61 and a floor cleaning device 63. The clothes treatment device 61 is communicatively connected to the floor cleaning device 63. The floor cleaning device 63 is configured to perform any one of the methods performed by the floor cleaning device 63 according to the above embodiments. The clothes treatment device 61 is configured to perform any one of the methods performed by the clothes treatment device 61 according to the above embodiments.

As shown in FIG. 10, the clothes treatment device 61 and a base station 62 of the floor cleaning device may be located in the same space, and the base station 62 of the floor cleaning device is located in a space below the clothes treatment device 61. A control panel of the clothes treatment device 61 and a control panel of the floor cleaning device 63 are connected to each other via a signal wire, to enable signal transmission between the clothes treatment device 61 and the floor cleaning device 63, thereby enabling interaction between the clothes treatment device 61 and the floor cleaning device 63.

It should be noted that the embodiments of the present disclosure do not limit the manner of communication between the clothes treatment device 61 and the floor cleaning device 63, and the clothes treatment device 61 and the floor cleaning device 63 may be sold together or separately, which are not limited herein. It should be noted that the embodiments of the present disclosure can also be extended to a case where an upper machine is an electric appliance with a larger occupied area and a lower machine is an electric appliance that can be temporarily separated from the upper machine to operate independently.

It needs to be noted that the relational terms, such as "first" and "second," are used only to distinguish one entity or operation from another entity or operation without necessarily requiring or implying any such actual relationship or order between such entities or operations. Furthermore, the terms "including," "containing," or any other variation thereof are intended to cover non-exclusive inclusion, such that a process, a method, an article, or a device that includes a list of elements does not include only those elements, but may include other elements not expressly listed or inherent to such process, method, article, or device. Without further limitation, the elements limited by the statement "including one..." do not exclude the existence of other identical elements in the process, method, article, or device that includes the said elements. The above is only the specific embodiments of the present disclosure, which enables those skilled in the art to understand or implement the present disclosure. Various modifications to these embodiments will be readily apparent to those skilled in the art, and the generic principles defined herein may be implemented in other embodiments without departing from the spirit or scope of the present disclosure. Therefore, the present disclosure is not intended to be limited to the embodiments described herein, but is to conform to the widest range consistent with the principles and novel features disclosed herein.

### Industrial Applicability

The present disclosure provides an operation control method performed by a first device. The method operation control includes: acquiring a user instruction for a second device; generating an operation instruction for the second device based on the user instruction; and sending the operation instruction to the second device. The operation instruction is used for instructing the second device to perform a corresponding target operation. The first device is one of a clothes treatment device and a floor cleaning device, and the second device is another one of the clothes treatment device and the floor cleaning device. According to the technical solution of the present disclosure, the first device receives the user instruction for the second device, and sends the operation instruction generated on this basis to the second device, such that the second device performs a corresponding target operation, thereby increasing the control modes of the second device, improving the condition of a single control mode caused by achieving control only based on the floor cleaning device, and also eliminating the need for a user to walk to the front of the clothes treatment device for operation, thereby improving the convenience of control.

## Claims

1. An operation control method performed by a first device, the method comprising:
acquiring a user instruction for a second device;
generating an operation instruction for the second device based on the user instruction; and
sending the operation instruction to the second device, the operation instruction being used for instructing the second device to perform a corresponding target operation,
wherein the first device is one of a clothes treatment device and a floor cleaning device, and the second device is another one of the clothes treatment device and the floor cleaning device.

2. The method according to claim 1, further comprising:
acquiring current status data sent by the second device;
generating information to be notified based on the current status data; and
presenting the information to be notified, the information to be notified being used for notifying a user of a current status of the second device.

3. The method according to claim 2, wherein the second device is the floor cleaning device, and the current status data comprises at least one of an alarm status, a cleaning progress, a dust cup status, or a water volume status; or
the second device is the clothes treatment device, and the current status data comprises at least one of a clothes treatment progress, remaining treatment time, or an alarm status.

4. The method according to claim 2, wherein the first device is the clothes treatment device and the second device is the floor cleaning device, and the method further comprises:
acquiring feedback information of the floor cleaning device after receiving the operation instruction; and
presenting, based on the feedback information, a status that the floor cleaning device has received the operation instruction.

5. The method according to claim 4, further comprising, prior to acquiring the current status data sent by the second device:
acquiring, from the user, an inquiry instruction regarding the current status of the floor cleaning device; and
sending a request to the floor cleaning device for feedback of the current status based on the inquiry instruction.

6. The method according to claim 2, wherein the first device is the floor cleaning device and the second device is the clothes treatment device, and the floor cleaning device moves within a predetermined spatial range; and the method further comprises:
acquiring a communication status between the floor cleaning device and the clothes treatment device; and
when the floor cleaning device establishes a communication connection with the clothes treatment device, sending the operation instruction to the clothes treatment device and/or acquiring the current status data sent by the clothes treatment device.

7. The method according to claim 6, wherein said acquiring the communication status between the floor cleaning device and the clothes treatment device comprises:
acquiring a first distance between a current position of the floor cleaning device and the clothes treatment device,
wherein the floor cleaning device establishing the communication connection with the clothes treatment device comprises: the first distance being shorter than or equal to a first predetermined distance threshold.

8. The method according to any one of claims 2 to 7, further comprising:
acquiring a second distance between a current position of the floor cleaning device and the user; and
presenting the information to be notified when the second distance is shorter than or equal to a second predetermined distance threshold.

9. The method according to any one of claims 2 to 7, further comprising:
acquiring a third distance between a current position of the floor cleaning device and the user; and
presenting prompt information when the third distance is shorter than or equal to a third predetermined distance threshold, the prompt information being used for prompting the user to issue the user instruction for the clothes treatment device.

10. An operation control method performed by a second device, the method comprising:
acquiring an operation instruction sent by a first device, the operation instruction being generated by the first device based on an acquired user instruction for the second device; and
performing a corresponding target operation based on the operation instruction,
wherein the first device is one of a clothes treatment device and a floor cleaning device, and the second device is another one of the clothes treatment device and the floor cleaning device.

11. The method according to claim 10, further comprising:
sending current status data to the first device,
wherein the current status data is received by the first device, and generates information to be notified for presenting to a user, and the information to be notified is used for notifying the user of a current status of the second device.

12. The method according to claim 11, wherein the second device is the floor cleaning device, and the current status data comprises at least one of an alarm status, a cleaning progress, a dust cup status, or a water volume status; or
the second device is the clothes treatment device, and the current status data comprises at least one of a clothes treatment progress, remaining treatment time, or an alarm status.

13. The method according to claim 10 or 11, wherein the second device is the floor cleaning device, and the target operation comprises at least one of sweeping, vacuuming, water spraying, brushing, blotting, or polishing; or
the second device is the clothes treatment device, and the target operation comprises at least one of washing, rinsing, spin-drying, drying, or self-cleaning.

14. The method according to claim 10 or 11, wherein the first device is the clothes treatment device and the second device is the floor cleaning device, and the method further comprises:
sending feedback information to the clothes treatment device in response to acquiring the operation instruction,
wherein the feedback information is used for the clothes treatment device to present a status that the operation instruction has been received by the floor treatment device.

15. The method according to claim 14, further comprising, prior to sending the current status data to the first device:
receiving a request sent by the clothes treatment device for feedback of a current status; and
generating the current status data in response to the request.

16. An electric appliance, comprising:
a processor; and
a memory,
wherein the processor being configured to invoke a program or an instruction stored in the memory, to perform a method according to any one of claims 1 to 9 or perform a method according to any one of claims 10 to 15.

17. A cleaning and treatment apparatus, comprising:
a first device; and
a second device,
wherein the first device being communicatively connected to the second device, the first device being configured to perform a method according to any one of claims 1 to 9, the second device being configured to perform a method according to any one of claims 10 to 15; and
wherein the first device is one of a clothes treatment device and a floor cleaning device, and the second device is another one of the clothes treatment device and the floor cleaning device.
